# EUROPÄISCHE PATENTSCHRIFT

(11) **EP 1 094 290 B1**
(45) Veröffentlichungstag und Bekanntmachung des Hinweises auf die Patenterteilung: **09.08.2006**
(21) Anmeldenummer: 00119544.5
(22) Anmeldetag: 07.09.2000
(51) Int. Cl.: F28D 1/04, F01P 3/18, F01P 5/02

(54) **Kühlanlage**
Cooling system
Installation de refroidissement

(30) Priorität: 21.10.1999 DE 19950754
(43) Veröffentlichungstag der Anmeldung: 25.04.2001
(73) Patentinhaber: Modine Manufacturing Company, Racine Wisconsin 53403 (US)
(72) Erfinder: Zobel, Werner, 71052 Böblingen (DE); Ehlers, Michael, 72202 Nagold (DE); Vetter, Frank, 70794 Filderstadt (DE); Soldner, Jörg, 71139 Ehningen (DE)
(74) Vertreter: Wolter, Klaus-Dietrich

(56) Entgegenhaltungen:
- DE-A- 19 724 728
- DE-C- 19 713 712

## Beschreibung

Die Erfindung betrifft eine Kühlanlage mit mehreren einzelnen, jeweils ein Kühlnetz und zwei Seitenteile aufweisenden Kühlern, wobei die Kühler kastenförmig derart angeordnet sind, daß der Kantenbereich der kastenförmigen Anordnung durch einen Sammelkasten eines Kühlers und einen Sammelkasten des nächsten Kühlers gebildet ist und die Kühlanlage einen Radialventilator innerhalb der kastenförmigen Anordnung aufweist, der Frischluft über eine Ansaugöffnung in der Frontplatte ansaugt und als Kühlluft durch die Kühler der kastenförmigen Anordnung hindurchbläst, die durch eine Rückwand verschlossen ist.

Eine Kühlanlage wurde in der nicht vorher veröffentlichten europäischen Patentanmeldung EP-A-1045217 beschrieben. Dort wird bereits eine kompakte sowie leistungsmäßig optimierte Kühlanlage angestrebt, die an den für den jeweiligen Einsatzfall erforderlichen Kühlleistungsbedarf dadurch angepaßt werden kann, daß die Kühlanlage aus Kühlern besteht, von denen mindestens ein Kühler eine andere Kühlnetztiefe aufweist als diejenige der anderen Kühler. Diese Maßnahme hat sich jedoch für manche Fälle als nicht ausreichend erwiesen, zumal die Kühlnetztiefe wegen des dadurch verursachten erhöhten Druckverlustes nicht beliebig weit erhöht werden sollte

Eine dem Oberbegriff entsprechende Kühlanlage ist aus der DE 197 24 728 A1 und DE 19713712 C1 bekannt. Die Tiefe des Kühlnetzes der Kühler wurde dort nicht erwähnt.

Weitere Kühlanlagen mit ähnlichen Merkmalen sind aus US 4 202 296 und aus DE 31 48 942 C1 bekannt. Sie beziehen sich jedoch nicht auf kastenförmige Anordnungen mit mehreren einzelnen Kühlern, sondern auf sogenannte Ringkühler, die fertigungstechnisch aufwendig sind und sich deshalb bisher nicht durchsetzen konnten. Auch wenn aus der DE -AS- 27 16 997 ein Ringkühler zur Kühlung verschiedener Medien bekannt ist, ist es nur mit äußerstem Aufwand möglich, diese Kühler so zu dimensionieren oder auszubilden, daß sie dem Kühlleistungsbedarf, beispielsweise eines Lastkraftwagens, und zwar für die Ladeluft, die Kühlflüssigkeit, das Kältemittel oder das Getriebeöl entsprechen können.

Die Aufgabe der Erfindung besteht darin, weitere Optimierungsmaßnahmen der obenbeschriebenen Kühlanlage zur Anpassung an den konkreten Kühlleistungsbedarf vorzuschlagen, so daß mit einfachen Maßnahmen solche Kühlanlagen z.B. für Kraftfahrzeuge mit unterschiedlichen Kühlleistungsanforderungen bereitgestellt werden können, die darüber hinaus sehr effizient arbeiten sollen.

Erfindungsgemäß wird vorgeschlagen, daß wenigstens ein Kühler der Kühlanlage eine größere Höhe des Kühlnetzes aufweist als die anderen Kühler, so daß er im Frontbereich und/oder im Rückwandbereich einen Überstand über die anderen Kühler besitzt.

Es ist ferner vorgesehen, Kühler mit unterschiedlichen Kühlnetztiefen mit Kühlern mit unterschiedlichen Höhen zu kombinieren. Insbesondere kann ein Kühler der Kühlanlage eine andere Kühlnetztiefe und eine andere Höhe als die anderen Kühler aufweisen. Die Kombination kann aber auch darin bestehen, daß ein Kühler eine andere Höhe und ein anderer Kühler eine andere Kühlnetztiefe besitzt. Der oder die Kühler, die einen Überstand über die anderen Kühler aufweisen, können ein Seitenteil besitzen, das an die Frontwand bzw. Rückwand angepaßt ist. Die Anpassung ist jedoch vorzugsweise dadurch vorgesehen, daß die Frontwand einen Knick aufweist und sich über den gesamten Kühler mit erstreckt. Insbesondere bei größeren Kühlanlagen führen die erfindungsgemäßen Maßnahmen zu einer einfacheren Herstellbarkeit. Häufig ist es schwierig, die für den Ladeluftkühler benötigte Kühlleistung bereitzustellen, zumal dieser Kühler meist oben angeordnet sein sollte, weil die Stutzenlage für die Ladeluft gewöhnlich im oberen Bereich des Motors vorgesehen ist. Deshalb ist vorzugsweise der obenliegende Kühler ein Ladeluftkühler, der mit einer größeren Kühlnetztiefe und mit einer größeren Höhe des Kühlnetzes versehen worden ist.

Ferner führt das Vorsehen wenigstens eines Kühlers der Anordnung mit einer größeren Höhe zu einer sehr einfachen Anpassung an den geforderten Kühlleistungsbedarf, indem durch die Erfindung ganz einfach die Kühlnetzfläche wesentlich vergrößert worden ist. Im Vergleich mit bekannten axialen Kühlanlagen besitzt die erfindungsgemäße Kühlanlage eine wesentlich höhere Effizienz. Der Vergleich mit Kühlanlagen, die einen Ringkühler aufweisen zeigt, daß die erfindungsgemäße Kühlanlage wesentlich einfacher herstellbar und an unterschiedliche Leistungsanforderungen wesentlich einfacher anpaßbar ist.

Zur Anpassung an den geforderten Kühlleistungsbedarf wird im Stand der Technik häufig vorgesehen, die Kühler mit leistungsmäßig effizienteren Kühlnetzen auszustatten. Diese Maßnahme ist jedoch insbesondere bei geringeren Stückzahlen relativ aufwendig. Durch die Erfindung wird es möglich, die Kühlnetze der Kühler insofern einheitlich zu gestalten, als gleiche Rohre und Lamellen eingesetzt werden können, was fertigungstechnisch ein wesentlicher Vorteil ist.

Die Möglichkeiten zur Auslegung und zur Anpassung der Kühlleistung solcher Anlagen an den Kühlleistungsbedarf, beispielsweise eines Lastkraftwagens, wurden durch die Erfindung wesentlich ausgebaut.

Weitere Merkmale befinden sich in den Patentansprüchen.

Ein Ausführungsbeispiel der Erfindung wird nachfolgend unter Verweis auf die beiliegenden zwei Figuren beschrieben, die eine Kühlanlage 1 für Lastkraftwagen darstellen.

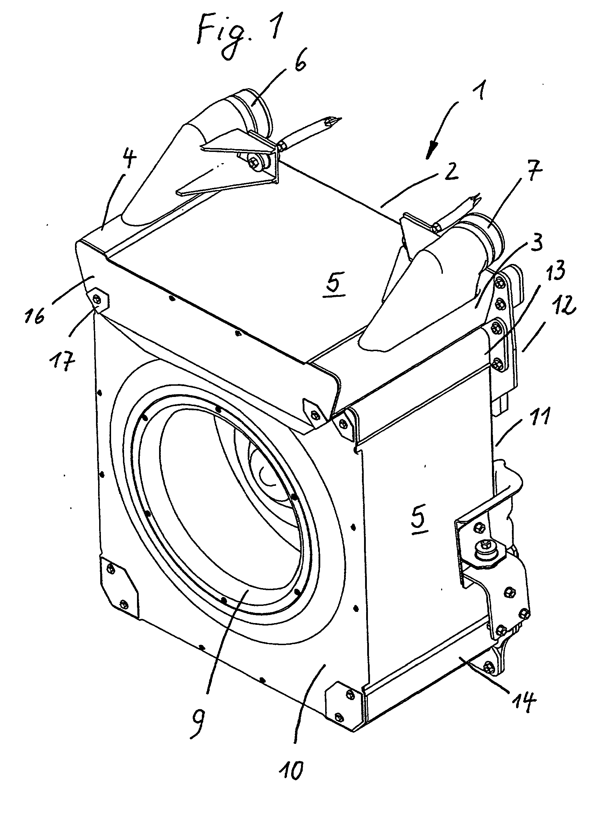

Die perspektivische Ansicht gemäß Fig. 1 der Kühlanlage 1 zeigt einen obenliegenden Ladeluftkühler 2, bestehend aus zwei gegenüberliegenden Sammelkästen 3, 4 für die Ladeluft. Zwischen den beiden Sammelkästen 3, 4 befindet sich ein nicht näher dargestelltes Kühlnetz 5 aus Reihen von Flachrohren, die die beiden Sammelkästen 3, 4 verbinden und aus dazwischen angeordneten Lamellen gleicher Ausbildung.

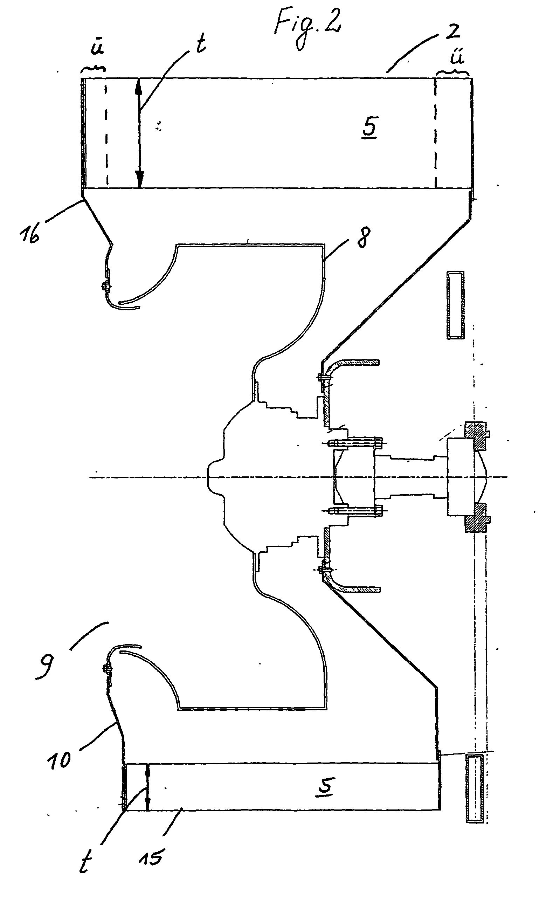

Der Ladeluftkühler 2 hat einen Eingang 6 und einen Ausgang 7 für die Ladeluft, die beim Durchströmen der Rohre des Kühlnetzes mittels Kühlluft gekühlt wird, die von einem Radialventilator 8 durch die Öffnung 9 in der Frontwand 10 der Kühlanlage 1 angesaugt und durch das Kühlnetz 5 des Ladeluftkühlers 2 sowie durch die Kühlnetze 5 der anderen Kühler gedrückt wird. Von den anderen Kühlern ist in der Figur 1 lediglich ein Kühlflüssigkeitskühler 11 zu erkennen. Die nicht gezeigte gegenüberliegende Seite und die Unterseite weisen ebenfalls Kühler auf. Ein unterer Kühler 15 geht aus Fig. 2 hervor. Die Kühlanlage 1 ist an der Hinterseite mittels einer Rückwand 12 verschlossen. Der Kühlflüssigkeitskühler 11 besitzt ebenfalls zwei gegenüberliegende Sammelkästen 13, 14 für die Kühlflüssigkeit des Fahrzeugmotors und ein Kühlnetz 5 grundsätzlich gleicher Ausbildung wie beschrieben, jedoch zugeschnitten auf den Zweck als Kühlflüssigkeitskühler und insofern verschieden vom Kühlnetz 5 des Ladeluftkühlers 2. Durch die Rohre dieses Kühlnetzes 5 strömt die Kühlflüssigkeit vom Sammelkasten 13 in Richtung des Sammelkastens 14, während die Kühlluft in gleicher Weise wie beim Ladeluftkühler 2 durch die Abstände zwischen den Rohren hindurchströmt, die mit Lamellen belegt sind. Der Sammelkasten 13 des Wasserkühlers 11 bildet gemeinsam mit dem Sammelkasten 3 eine Kante der Kühlanlage aus und zwar so, daß dort keine Kühlluft ungenutzt abströmen kann. In gleicher Weise sind die nicht dargestellten anderen drei Kanten der Kühlanlage 1 ausgebildet.

Die Fig. 2 stellt einen Querschnitt durch Fig. 1 dar.

Der Ladeluftkühler 2 des Ausführungsbeispiels hat eine deutlich größere Tiefe t des Kühlnetzes 5 als der untere Kühler 15. Außerdem besitzt der Ladeluftkühler 2 eine größere Bauhöhe als der untere Kühler 15 und der Kühlflüssigkeitskühler 11. Dadurch ergibt sich ein Überstand ü des Ladeluftkühlers 2, der im Ausführungsbeispiel nach vorne und nach hinten also über die Frontseite und die Rückseite ausgebildet ist. Der Ladeluftkühler 2 besitzt ein Seitenteil 16. Das Seitenteil 16 übersteigt die Tiefe t des Kühlnetzes wesentlich und erstreckt sich nach unten bis in die Frontwand 10, so daß das Seitenteil 16 einen oberen Teil der Frontwand 10 darstellt. In dem Seitenteil ist eine Abkantung angebracht, die den Überstand ü ausgleichen soll. Das Seitenteil 16 ist mit der Frontwand 10 mittels Verbindern 17 an beiden Seiten fest zusammengekoppelt, um der Funktion der Frontwand 10 als Stabilitätselement der Kühlanlage zu entsprechen. Ferner ist das Seitenteil 16 so ausgebildet, daß es die oberen Öffnungen der Sammelkästen 3 und 4 verschließt. Wie aus der Fig. 1 zu erkennen ist, reicht das Seitenteil 16 nicht nur über die Breite des Kühlnetzes 5 sondern weiter bis über beide Sammelkästen 3, 4. Die Verbindung zwischen Seitenteil 16 und Sammelkästen 3, 4 kann eine Schweißverbindung sein. Bevorzugt ist jedoch die Frontwand 10 ein einheitliches Teil mit einem Knick, daß die gesamte Frontseite der Kühlanlage abdeckt.

## Patentansprüche

1. Kühlanlage (1) mit mehreren einzelnen, jeweils ein Kühlnetz (5) und zwei Seitenteile aufweisenden Kühlern (2,11,15), wobei die Kühler kastenförmig derart angeordnet sind, daß der Kantenbereich der kastenförmigen Anordnung durch einen Sammelkasten (3) eines Kühlers (2) und einen Sammelkasten (13) des nächsten Kühlers (11) gebildet ist, wobei die Kühlanlage (1) einen Radialventilator (8) innerhalb der kastenförmigen Anordnung aufweist, der Frischluft über eine Ansaugöffnung (9) in der Frontwand (10) ansaugt und als Kühlluft durch die Kühler (2, 11, 15) der kastenförmigen Anordnung hindurchbläst, die durch eine Rückwand (12) verschlossen ist,
**dadurch gekennzeichnet, daß** zumindest ein kühler eine ander kühlnetztiefe (t) als die andere kühler besitzt und
wenigstens ein Kühler (2) der Kühlanlage (1) eine größere Höhe des Kühlnetzes aufweist als die anderen Kühler (5, 11), so daß er einen Überstand (ü) über die anderen Künler im Front-wandbereich und/oder im Rückwandbereich besitzt.

2. Kühlanlage nach Anspruch 1, **dadurch gekennzeichnet, daß** mindestens ein Kühler (2) eine andere Kühlnetztiefe (t) und eine andere Kühlnetzhöhe aufweist als die anderen Kühler (11, 15).

3. Kühlanlage nach Anspruch 1, **dadurch gekennzeichnet, daß** wenigstens ein Kühler eine andere Kühlnetztiefe (t) und ein anderer Kühler eine andere Kühlnetzhöhe besitzt.

4. Kühlanlage nach den Ansprüchen 1 und 2, **dadurch gekennzeichnet, daß** der obenliegende Kühler (2) der Ladeluftkühler ist, der eine größere Kühlnetztiefe (t) und eine größere Kühlnetzhöhe aufweist als die anderen Kühler (11, 15).

5. Kühlanlage nach einem der Ansprüche 1 bis 4, **dadurch gekennzeichnet, daß** die Frontwand (10) einen Knick zum Ausgleich des Überstandes (ü) aufweist und die gesamte Frontseite der Kühlanlage (1) abdeckt.

6. Kühlanlage nach einem der Ansprüche 1 bis 4, **dadurch gekennzeichnet, daß** der Kühler (2) ein Seitenteil (16) aufweist, das sich bis über beide Sammelkästen (3, 4) und bis in die Frontwand (10) hinein erstreckt, um einen Teil derselben zu bilden.

7. Kühlanlage nach Anspruch 6, **dadurch gekennzeichnet, daß** zwischen dem Seitenteil (16) und der Frontwand (10) Verbinder (17) angeordnet sind.

8. Kühlanlage nach den Ansprüchen 6 und 7, **dadurch gekennzeichnet, daß** das Seitenteil (16) eine Abkantung und eine Schräge zur Anpassung an die übrige Frontwand (10) besitzt.

## Claims

1. Cooling system (1) with a plurality of individual coolers (2, 11, 15), each having a cooling network (5) and two side parts, the coolers being arranged in box-shaped manner in such a way that the edge region of the box-shaped arrangement is formed by a header (3) of one cooler (2) and a header (13) of the next cooler (11), the cooling system (1) having, within the box-shaped arrangement, a radial fan (8) which sucks in fresh air via a suction-intake port (9) in the front wall (10) and blows the said fresh air as cooling air through the coolers (2, 11, 15) of the box-shaped arrangement which is closed by means of a rear wall (12), **characterized in that** at least one cooler possesses a different cooling-network depth (t) than the other coolers, and at least one cooler (2) of the cooling system (1) has a greater height of the cooling network than the other coolers (5, 11), so that it possesses a projection (ü) beyond the other coolers in the front-wall region and/or the rear-wall region.

2. Cooling system according to Claim 1, **characterized in that** at least one cooler (2) has a different cooling-network depth (t) and a different cooling-network height than the other coolers (11, 15).

3. Cooling system according to Claim 1, **characterized in that** at least one cooler possesses a different cooling-network depth (t) and another cooler possesses a different cooling-network height.

4. Cooling system according to Claims 1 and 2, **characterized in that** the upper cooler (2) is the charge-air cooler which has a greater cooling-network depth (t) and a greater cooling-network height than the other coolers (11, 15).

5. Cooling system according to one of Claims 1 to 4, **characterized in that** the front wall (10) has a bend for compensating the projection (ü) and covers the entire front side of the cooling system (1).

6. Cooling system according to one of Claims 1 to 4, **characterized in that** the cooler (2) has a side part (16) which extends beyond the two headers (3, 4) and into the front wall (10), in order to form part of the latter.

7. Cooling system according to Claim 6, **characterized in that** connectors (17) are arranged between the side part (16) and the front wall (10).

8. Cooling system according to Claims 6 and 7, **characterized in that** the side part (16) possesses an edging and a slope for adaptation to the remaining front wall (10).

## Revendications

1. Installation de refroidissement (1) comprenant plusieurs refroidisseurs individuels (2, 11, 15) présentant chacun un réseau de refroidissement (5) et deux parties latérales, les refroidisseurs étant disposés en forme de caisse de telle sorte que la région des arêtes de l'agencement en forme de caisse soit formée par une caisse collectrice (3) d'un refroidisseur (2) et une caisse collectrice (13) du refroidisseur suivant (11), l'installation de refroidissement (1) présentant un ventilateur radial (8) à l'intérieur de l'agencement en forme de caisse, qui aspire de l'air frais par le biais d'une ouverture d'admission (9) dans la paroi avant (10) et qui le souffle en tant qu'air de refroidissement à travers les refroidisseurs (2, 11, 15) de l'agencement en forme de caisse, qui est fermé par une paroi arrière (12),
**caractérisée en ce que**
au moins un refroidisseur possède une profondeur de réseau de refroidissement (t) différente de celle des autres refroidisseurs et
au moins un refroidisseur (2) de l'installation de refroidissement (1) présente une plus grande hauteur de réseau de refroidissement que les autres refroidisseurs (5, 11), de sorte qu'il possède un dépassement (ü) au-dessus des autres refroidisseurs dans la région de la paroi avant et/ou dans la région de la paroi arrière.

2. Installation de refroidissement selon la revendication 1, **caractérisée en ce qu'**au moins un refroidisseur (2) présente une profondeur de réseau de refroidissement (t) et une hauteur de réseau de refroidissement différentes de celles des autres refroidisseurs (11, 15).

3. Installation de refroidissement selon la revendication 1, **caractérisée en ce qu'**au moins un refroidisseur présente une profondeur de réseau de refroidissement (t) différente et un autre refroidisseur présente une hauteur de réseau de refroidissement différente.

4. Installation de refroidissement selon les revendications 1 et 2, **caractérisée en ce que** le refroidisseur situé en haut (2) est le refroidisseur de l'air de charge, qui présente une profondeur de réseau de refroidissement (t) et une hauteur de réseau de refroidissement plus grandes que les autres refroidisseurs (11, 15).

5. Installation de refroidissement selon l'une quelconque des revendications 1 à 4, **caractérisée en ce que** la paroi avant (10) présente un fléchissement pour compenser le dépassement (ü) et recouvre l'ensemble du côté avant de l'installation de refroidissement (1).

6. Installation de refroidissement selon l'une quelconque des revendications 1 à 4, **caractérisée en ce que** le refroidisseur (2) présente une partie latérale (16) qui s'étend jusqu'au-delà des deux caisses collectrices (3, 4) et jusque dans la paroi avant (10), afin d'en former une partie.

7. Installation de refroidissement selon la revendication 6, **caractérisée en ce que** des éléments de liaison (17) sont disposés entre la partie latérale (16) et la paroi avant (10).

8. Installation de refroidissement selon les revendications 6 et 7, **caractérisée en ce que** la partie latérale (16) possède une partie recourbée et un biseau pour s'adapter au reste de la paroi avant (10).
